# EUROPEAN PATENT APPLICATION

(11) **EP 4 686 599 A1**
(43) Date of publication of application: **04.02.2026**
(21) Application number: 25193223.2
(22) Date of filing: 31.07.2025
(51) Int. Cl.: B60L 3/00, B60L 3/04, B60L 3/12, H01M 10/42, H01M 10/48

(54) **BATTERY MANAGEMENT DEVICE FOR SOFTWARE-DEFINED VEHICLE**

(30) Priority: 01.08.2024 KR 20240102547; 11.09.2024 KR 20240123792; 28.07.2025 KR 20250102352
(71) Applicant: LG Energy Solution, Ltd., Seoul 07335 (KR)
(72) Inventor: KIM, Tae Youn, 34122 DAEJEON (KR)
(74) Representative: Plasseraud IP

(57) **Abstract**

A battery management according to an embodiment of this document may include at least one slave device and a master device including a communication circuit and a control circuit. The communication circuit may transmit battery data received from each of the at least one slave device to an external electronic device, and receive a control command according to a processing result of the battery data from the external electronic device. The control circuit may control a switching unit that connects the external electronic device and the battery based on the received control command.

## Description

### TECHNICAL FIELD

The present invention relates to a battery management device, and more specifically, to a battery management device for managing a battery mounted on a software-defined vehicle.

### BACKGROUND ART

Secondary batteries, which are batteries that can be reused by charging after use, are manufactured as battery modules or battery packs formed by connecting multiple battery cells in series according to an output capacity required by the device and are used as power sources of various devices. Such batteries are used in various fields, including not only small high-tech electronic devices such as smartphones, but also electric bicycles, electric vehicles, and energy storage systems (ESS).

A battery module or battery pack is a structure in which multiple battery cells are combined, and when overvoltage, overcurrent, or overheating occurs in some battery cells, problems may occur in the safety and operating efficiency of the battery module or battery pack, and thus a means for detecting the overvoltage, overcurrent, or overheating is essential. Therefore, a battery module or battery pack is equipped with a battery management system (BMS) that measures a voltage value of each battery cell and monitors and controls a voltage state of the battery cells based on the measured value. The batteries applied to the vehicle are also mounted on the vehicle, including this BMS.

Meanwhile, vehicles are rapidly converging with various information and communication technologies and are continuously changing from existing hardware-based electronic apparatuses to software-oriented apparatuses. Therefore, recent vehicles include several small electronic control units (ECUs) dedicated to specific functions, various sensors, cameras, radars, lidar devices, etc., within the vehicle, and require software code related to each component. Accordingly, vehicle platforms are evolving toward software-defined vehicles (SDVs) in which features and functionalities of the vehicle are mainly implemented through software.

Software-defined Vehicle (SDV) technology refers to a technology in which zone controllers corresponding to individual zones of a vehicle are deployed according to individual zones of the vehicle, and a higher-level controller comprehensively manages these zone controllers.

Accordingly, the BMS also needs to change its architecture to keep up with these changes in the vehicle platform.

Examples of related art include CN 214215682 U.

### DISCLOSURE OF THE INVENTION

### TECHNICAL PROBLEM

In a centralized vehicle structure, when an abnormal state of the battery occurs, a decision can be taken in an upper-level controller that is relatively electrically far from the battery compared to the battery management device. However, a method of performing a decision-making process only in an upper-level controller that is electrically far from the battery has the problem that the time and resources required for such decision-making process increase compared to a method of taking decisions in the battery management device.

In addition, the method of performing decision-making only in the upper-level controller has the problem that when an error occurs in the communication between the upper-level controller and the battery management device, it is difficult to take appropriate action at an appropriate time for the battery, which may cause damage to the battery, and consequently damage to the power system of the entire vehicle.

Embodiments disclosed in this document provide a battery management device that manages a battery mounted on a software-defined vehicle.

### TECHNICAL SOLUTION

A battery management device according to an embodiment of the present invention is defined in the appended claims.

A battery management method is also provided.

### ADVANTAGEOUS EFFECTS

According to embodiments of the present disclosure, the existing MCU of the BMS is deleted, so that there is no need for cumbersome software upgrade work.

In addition, not only can BMS costs be reduced by increasing the degree of freedom of functional consultation, but also the rapidity of BMS development can be maximized by deleting individual functional blocks.

### BRIEF DESCRIPTION OF THE DRAWINGS

FIG. 1 is a conceptual diagram illustrating a structure of a vehicle including a battery management device according to an embodiment of the present invention;
FIG. 2 is another conceptual diagram showing a structure of a vehicle including a battery management device according to an embodiment of the present invention;
FIG. 3 is a block diagram showing a configuration of a battery management device according to an embodiment of the present invention;
FIG. 4 is a diagram showing a battery and a battery management device mounted on a vehicle according to an embodiment of the present invention;
FIG. 5 is a schematic block configuration diagram of a battery management device (BMS) according to an embodiment of the present invention;
FIG. 6 is a detailed block configuration diagram of a typical battery management device (BMS) of the prior art;
FIG. 7 is a block diagram of a battery management device according to an embodiment of the present invention;
FIG. 8 is a diagram showing a cost reduction effect that can be expected when applying a battery management device according to an embodiment of the present invention;
FIG. 9 is a diagram showing the flow of operations of a battery management device that receives a control command from an external electronic device, in a battery management method according to an embodiment of the present invention; and
FIG. 10 is a block diagram showing a hardware configuration of a computing system for performing an operating method of a communication control device according to an embodiment of the present invention.

### MODE FOR CARRYING OUT THE INVENTION

Since the present invention may be subject to various modifications and may have various embodiments, specific embodiments will be illustrated in the drawings and described in detail in the detailed description. However, this is not intended to limit the present invention to specific embodiments, and it should be understood that the present invention includes all modifications, equivalents, or substitutes included in the technical scope of the present invention. In describing each drawing, similar reference numerals are used for similar components.

It should be noted that, in adding reference numerals to components of each drawing, the same components are given the same reference numerals as much as possible even if they are illustrated in different drawings. In addition, in describing various embodiments disclosed in this document, when it is determined that a specific description of a related known configuration or function hinders an understanding of the embodiments of the present invention, a detailed description thereof will be omitted. The singular form of a noun corresponding to an item may include a single item or multiple items, unless the context clearly indicates otherwise.

The terms "first", "second", "A", "B", etc. may be used to describe various components, but the components should not be limited by the terms. The terms are used only to distinguish one component from another. For example, without departing from the scope of the present invention, a first component may be referred to as a second component, and similarly, a second component may be referred to as a first component. The term "and/or" includes any combination of a plurality of related listed items or any one of a plurality of related listed items.

In addition, in the present disclosure, in order to determine whether a specific condition is satisfied or fulfilled, expressions of 'exceeding' or 'less than' may be used, but this is merely a description for expressing an example and does not exclude descriptions of 'greater than or equal to' or 'less than or equal to'. Conditions described as 'greater than or equal to' may be replaced with 'exceeding', conditions described as 'less than or equal to' may be replaced with 'less than', and conditions described as 'greater than or equal to and less than' may be replaced with 'exceeding and 'less than or equal to'. In addition, hereinafter, 'A' to 'B' mean at least one of the elements from A (inclusive of A) to B (inclusive of B).

In this document, each of phrases "A or B", "at least one of A and B", "at least one of A or B", "A, B, or C", "at least one of A, B, and C", and "at least one of A, B, or C" may include any one of the items listed together in that phrase, or all possible combinations thereof.

The method according to various embodiments disclosed in this document may be provided by being included in a computer program product. The computer program product may be traded between a seller and a buyer as a product. The computer program product may be distributed in the form of a machine-readable storage medium (e.g., compact disc read only memory (CD-ROM)), or may be distributed online (e.g., downloaded or uploaded) through an application store or directly between two user devices. In the case of online distribution, at least a part of the computer program product may be temporarily stored or temporarily generated in a machine-readable storage medium such as a memory of a manufacturer's server, an application store's server, a relay server.

According to various embodiments, each of the components (e.g., modules or programs) described above may include a single or a plurality of entities, and some of the plurality of entities may be separated and placed in other components. According to various embodiments, one or more of the components among the components described above or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

When a component is referred to as being "connected" or "coupled" to another component, it should be understood that it may be directly connected or coupled to that other component, but that there may be other components in between. On the other hand, when a component is said to be "directly connected" or "directly coupled" to another component, it should be understood that there are no other components in between.

The terms used in this application are used only to describe specific embodiments and are not intended to limit the present invention. The singular expression includes the plural expression unless the context clearly indicates otherwise. In this application, the terms "comprise" or "have" are intended to specify the presence of a feature, number, step, operation, component, part, or combination thereof described in the specification, but should be understood to not preclude the presence or addition of one or more other features, numbers, steps, operations, components, parts, or combinations thereof.

Unless otherwise defined, all terms used herein, including technical or scientific terms, have the same meaning as commonly understood by a person of ordinary skill in the art to which the present invention belongs. Terms defined in commonly used dictionaries should be interpreted as having a meaning consistent with their meaning in the context of the relevant art, and shall not be interpreted in an idealized or overly formal sense unless explicitly defined in this application.

Hereinafter, preferred embodiments according to the present invention will be described in detail with reference to the accompanying drawings.

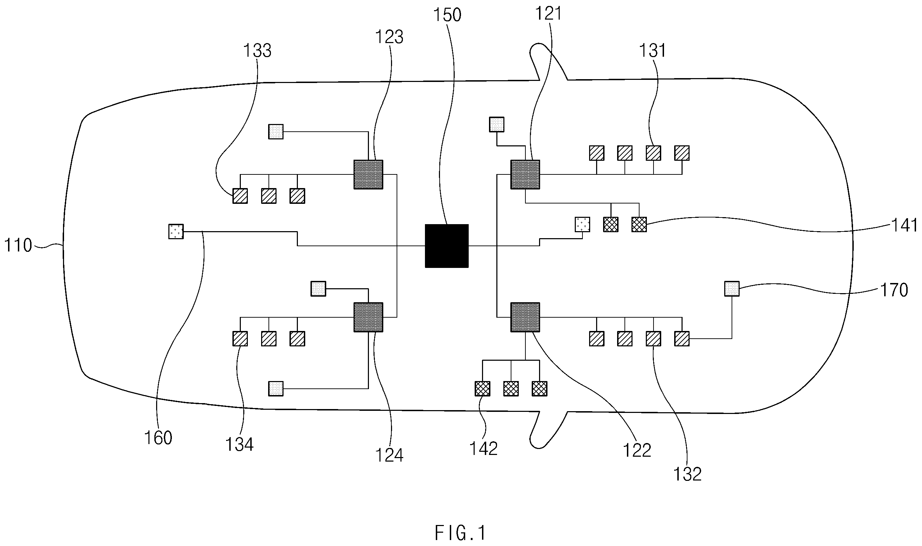

FIG. 1 is a conceptual diagram illustrating a structure of a vehicle including a battery management device according to an embodiment of the present invention.

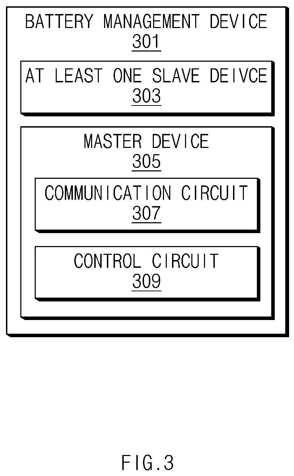

A battery management device (e.g., a battery management device 301 as shown in FIG. 3) includes at least some components included in a vehicle 110 according to an SDV architecture.

For example, the battery management device 301 monitors a battery, transmits the monitored data to components of the vehicle 110, and controls the battery based on a control command received from a high performance computer (HPC) 150 or from a zone controller.

For example, the vehicle 110 includes at least one of a first zone controller 121, a second zone controller 122, a third zone controller 123, a fourth zone controller 124, a first end device 131, a second end device 132, a third end device 133, a fourth end device 134, a first actuator 141, a second actuator 142, the high performance computer (HPC) 150, a transmission and reception path 160, an additional element 170, or any combination thereof.

According to an embodiment, a battery management device for monitoring and controlling a battery of the vehicle 110 includes at least some of the components included in the vehicle 110 above disclosed.

As an example, the HPC 150 is connected to the first zone controller 121, the second zone controller 122, the third zone controller 123, and the fourth zone controller 124, and transmits and receives various types of data to/from each zone controller 121 to 124.

As an example, the first zone controller 121 controls the first end device 131, the second zone controller 122 controls the second end device 132, the third zone controller 123 controls the third end device 133, and the fourth zone controller 124 controls the fourth end device 134.

For example, any end device 131 to 134 includes at least one of a sensor for controlling the vehicle 110, a battery (or, a battery management system (BMS)) for driving the vehicle 110, or any combination thereof. As an example, when the second end device 132 is the BMS, the additional element 170 may be defined as a battery pack.

As an example, the first zone controller 121 controls the first actuator 141, and the second zone controller 122 control the second actuator 142. The actuator includes, for example, at least one driving device for driving the vehicle 110.

For example, the components described above perform communication based on a designated path (e.g., a transmission/reception path 160) via automotive Ethernet.

For example, the battery management device 301 according to an embodiment performs communication with the HPC 150 or the zone controller (e.g., the first zone controller 121, the second zone controller 122, the third zone controller 123, and the fourth zone controller 124) via automotive Ethernet.

The battery management device 301 according to an embodiment monitors the battery, transmits the monitored data to the HPC 150 or the zone controller (e.g., the first zone controller 121, the second zone controller 122, the third zone controller 123, and the fourth zone controller 124), and controls the battery based on a control command received from the HPC 150 or the zone controller.

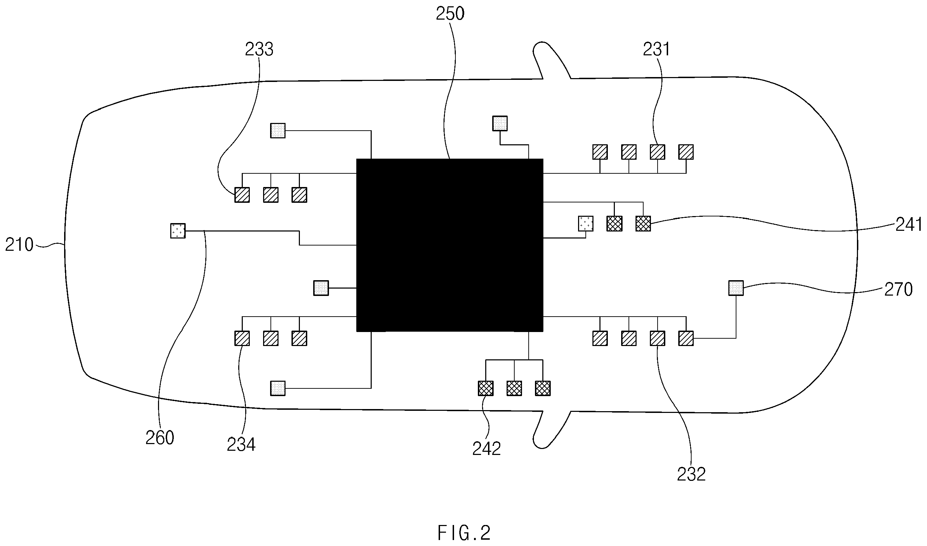

FIG. 2 is a conceptual diagram showing a structure of a vehicle including a battery management device according to another embodiment of the present invention.

In FIG. 2, the description of components defined with the same names as in FIG. 1 may be replaced with the description of FIG. 1 described above.

For example, a vehicle 210 includes at least one of a first end device 231, a second end device 232, a third end device 233, a fourth end device 234, a first actuator 241, a second actuator 242, a high performance computer (HPC) 250, a transmission and reception path 260, an additional element 270, or any combination thereof. The battery management device that monitors and controls a battery of the vehicle 210 includes at least some of the components included in the vehicle 210.

For example, the vehicle 210 according to FIG. 2 does not include a zone controller differently from FIG. 1. That is, even if the SDV architecture is adopted, the vehicle 210 may be implemented in a structure in which the HPC 250 directly controls at least one end device 231 to 234, as in FIG. 2.

FIG. 3 is a block diagram showing a configuration of a battery management device according to an embodiment of the present invention.

Referring to FIG. 3, the battery management device 301 includes at least one slave device 303, and a master device 305 including a communication circuit 307 and a control circuit 309.

According to an embodiment, any one of the at least one slave device 303 measures battery data (e.g., temperature, voltage, current) of a battery unit corresponding to any one of the slave devices.

According to an embodiment, the master device 305 receives battery data from each of the at least one slave device 303. The master device 305 transmits the received battery data to a processor (e.g., a computing device (e.g., the HPC 150 or 250) equipped in the vehicle 110 or 210) of an external electronic device, as detailed below.

According to an embodiment, a battery assembly (e.g., a battery pack) includes a plurality of battery units (e.g., battery modules) connected in series or in parallel. Each of the plurality of battery units may include a plurality of battery sub-units (e.g., battery cells).

One of the at least one slave device 303 may be arranged correspondingly to each of the battery units (e.g., the battery modules). Each of the at least one slave device 303 measures and monitors data indicating a battery state, such as temperature, voltage, or current of the corresponding battery unit, transmits the monitored information to the master device 305, and control each of the battery sub-units (e.g., battery cells) included in the battery unit based on a control command received from the master device 305.

The master device 305 may be arranged correspondingly to each of the battery assembly (e.g., the battery pack). The master device 305 collects data measured by monitoring each of the battery units from the slave devices 303 each corresponding to each of the battery units, transmits the data to the external electronic device (e.g., at least one processor (e.g., the HPC 150 or 250) included in the vehicle 110 or 210), and transmits a control command received from the external electronic device to each of the at least one slave device 303.

According to an embodiment, each of the at least one slave device 303 includes a battery monitoring integrated circuit (BMIC).

According to an embodiment, the master device 305 receives battery data from each of the at least one slave device 303 through the communication circuit 307. The master device 305 transmits the received battery data to the external electronic device through the communication circuit 307.

The external electronic device transmits a battery control command to the master device 305 based on the received battery data. Since whether to control the battery is determined based on the result of the calculation by the external electronic device based on the battery data, the master device 305 does not perform calculations. Therefore, the control circuit 309 does not include a processor. The control circuit 309 may include a control logic circuit.

According to an embodiment, the master device 305 receives a control command from the external electronic device in response to battery data through the communication circuit 307. In other words, the master device 305 receives a control command from the external electronic device, and the control command is transmitted from the external electronic device to the master device 305 according to a result computed by the processor of the external electronic device based on the battery data.

According to an embodiment, the communication circuit 307 transmits the control command received from the external electronic device to the control circuit 309 and the at least one slave device 303. Each of the at least one slave device 303 controls a corresponding battery unit based on the control command. The control circuit 309 controls a switching unit connecting the vehicle 110 or 210 and the battery based on the control command.

According to an embodiment, the communication circuit 307 transmits a signal indicating an abnormal state of the battery received from the at least one slave device 303 to the control circuit 309 when battery data are not included in a predefined range.

According to an embodiment, when a control command for controlling the switching unit to activate the connection between the external electronic device and the battery within a predefined period of time after receiving the signal indicating the abnormal state from the communication circuit 307 is not received through the communication circuit 307, the control circuit 309 controls the switching unit to deactivate the connection between the external electronic device and the battery.

In addition, when the control command for controlling the switching unit to deactivate the connection between the external electronic device and the battery within a predefined time after receiving the signal indicating the abnormal state is received from the communication circuit 307, the control circuit 309 controls the switching unit to deactivate the connection between the external electronic device and the battery.

The control circuit 309 controls the switching unit to activate the connection between the external device and the battery when a control command for controlling the switching unit to activate the connection between the external device and the battery is received from the external electronic device through the communication circuit 307 within a specified time, even if the signal indicating the abnormal state is received from the communication circuit 307, thereby reducing the frequency at which the connection between the external electronic device and the battery is deactivated due to noise.

In addition, the control circuit 309 controls the switching unit to deactivate the connection between the external device and the battery when the control command for controlling the switching unit to activate the connection of the battery is not received from the external electronic device within a predefined time after receiving the signal indicating the abnormal state from the communication circuit 307, thereby shortening the decision-making time.

Here, the abnormal state of the battery may indicate a case where the battery data is not included in the predefined range. For example, the abnormal state of the battery may include an overvoltage state in which the voltage of the battery is greater than a first reference voltage, or a low voltage state in which the voltage of the battery is less than a second reference voltage. The second reference voltage may be less than the first reference voltage.

Since the battery management device 301 performs processing of battery data through an external electronic device, a processor (e.g., a micro-controller unit (MCU)) is not included in the battery management device 301. The battery management device 301 is therefore without a processor.

Therefore, the battery management device 301 has a structure with a reduced complexity and a reduced manufacturing cost thanks to the fact that the battery data are processed through the external electronic device and not through a processor of the battery management device 301.

However, when the design of the battery management device 301 is simplified to reduce costs, the rapidity of action in response to a battery abnormality may be reduced. This is because battery data should be transmitted to the external electronic device and the processing result of the battery data received from the external electronic device should be received. In addition, when a complex system is built or additional sensors and processing devices are used to improve the rapidity of action in response to a battery abnormality, the cost may increase.

Therefore, the battery management device 301 processes battery data through the external electronic device in order to balance the reduction in manufacturing cost and the rapidity of action, and controls the switching unit to deactivate the connection between the external electronic device and the battery through the control circuit 309 when a signal indicating an abnormal state of the battery is received from one of the at least one slave device 303 through the communication circuit 307.

In other words, the battery management device 301 controls the switching unit to deactivate the connection between the external electronic device and the battery through at least one of a comparator, a transistor, or any combination thereof included in the control circuit 309 when a signal indicating an abnormal state of the battery is received. However, the embodiment of the present document is not limited thereto.

For example, the comparator refers to a component that compares an input signal with a reference value and outputs a control signal based on whether the input signal is greater than the reference value.

For example, the transistor includes a metal oxide silicon field effect transistor (MOSFET) switch. The MOSFET switch includes a gate terminal, a source terminal, and a drain terminal, and may activate or deactivate an electrical connection between the drain and the source according to a signal applied to the gate terminal.

For example, the transistor includes a bipolar junction transistor (BJT). The bipolar junction transistor includes an emitter terminal, a base terminal, and a collector terminal. The bipolar junction transistor amplifies or blocks the current flow between the collector and the emitter according to a current applied to the base terminal.

Through this, the battery management device 301 protects the external electronic device from overvoltage or undervoltage without going through the determination of the external electronic device.

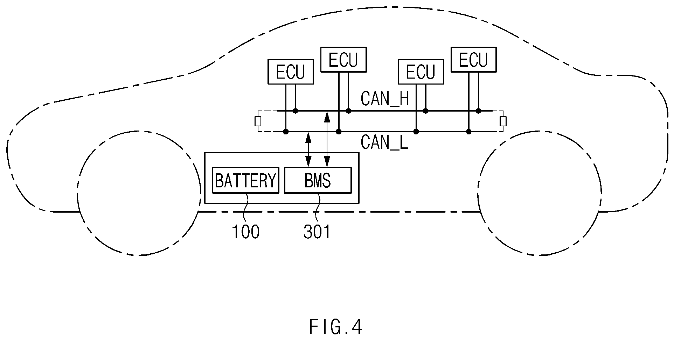

FIG. 4 is a diagram showing a battery and a battery management device mounted on a vehicle according to an embodiment of the present invention.

Referring to FIG. 4, the vehicle may be an electric vehicle, a hybrid vehicle, or a plug-in hybrid vehicle, and includes a battery pack (or module) including a battery 100 and the battery management device (BMS) 301. The vehicle includes a four-wheeled vehicle and a two-wheeled vehicle and operates by receiving power from the battery pack.

In order to operate such a vehicle, control operations such as motor drive control, regenerative braking control, air conditioning load control, and electric load power (12V) supply control are required. Referring to FIG. 4, there are several electronic control units (ECUs) in the vehicle for these control operations, and in addition, various sensors, cameras, radars, lidar devices, etc. are included therein. The electronic control unit (ECU) may include random access memory (RAM) and read only memory (ROM) as internal storage devices therein. The RAM in the ECU temporarily stores various signals that occur while the vehicle is running, and the data stored at this time gradually disappears over time and disappears all at once when electricity is not supplied. On the other hand, control data required for the vehicle to move is recorded in the ROM in the ECU, and the data stored in the ROM is not arbitrarily deleted or modified.

Multiple ECUs included in a vehicle communicate with each other via a wireless communication bus, CAN bus, or automotive Ethernet. The communication method used by the CAN protocol is a multi-master communication method, and all CAN controllers (ECU and BMS in FIG. 3) that share the communication bus act as masters, so that each controller can use the CAN bus whenever the controller wants to use the CAN bus. The CAN protocol also uses a message-oriented transmission protocol and may be robust to electrical noise because the CAN protocol uses a two wire, twisted-pair cable and is electrically discriminated.

Meanwhile, the vehicle requires software code for a large number of ECUs and sensors, cameras, radars, lidar devices, etc. In addition, more and more software is needed to satisfy new vehicle trends such as electrification, autonomous driving, and connectivity.

Therefore, the battery management device 301 that is linked to one or more ECUs in the vehicle also needs to change its architecture to meet the changes in the vehicle platform.

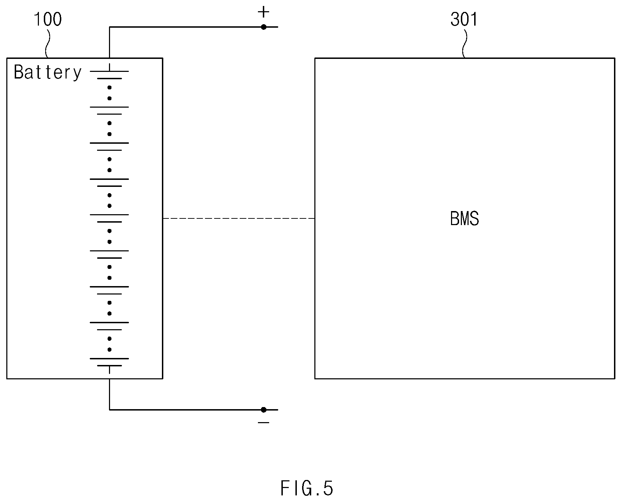

FIG. 5 is a schematic block configuration diagram of a battery management device (BMS) according to an embodiment of the present invention

The battery management device (BMS) 301 of the present invention monitors a state of the battery 100 and controls charging and discharging of the battery 100 based on the monitoring results. Here, the battery 100 may mean various types of battery assemblies such as a battery pack, a battery module, and a battery bank.

Referring to FIG. 5, the battery (or battery module) 100 is configured to include a plurality of battery cells connected in series. The battery cells or modules may be connected to a load through positive and negative terminals and may perform a charge/discharge operation. The most commonly used battery cell is a lithium ion (Li-Ion) battery cell.

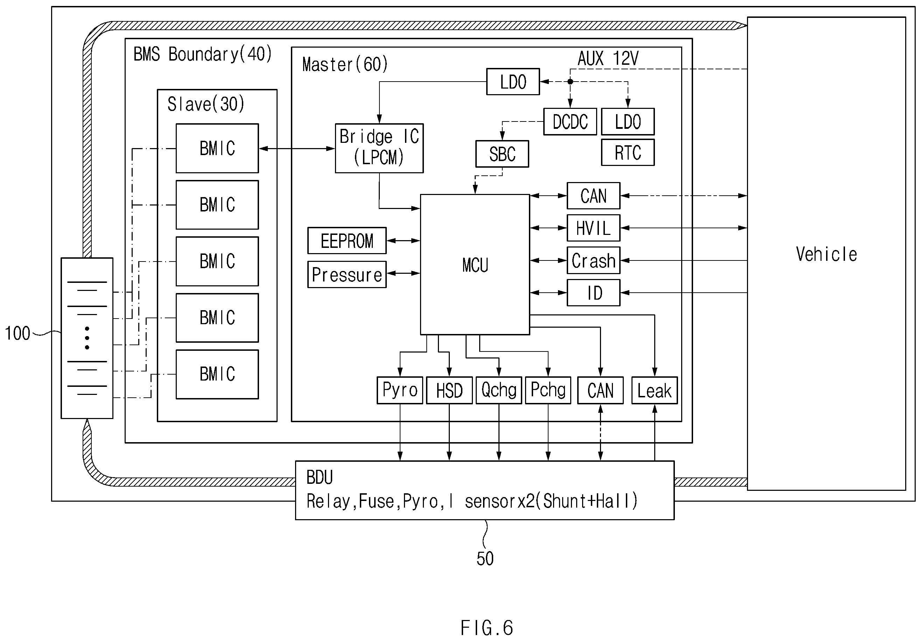

in the case of the battery management device of the prior art, a processor (e.g., a micro controller unit (MCU), see FIG. 6) is included, while, on the contrary, the battery management device 301 of the present invention does not include the processor.

Meanwhile, the battery management device 301 (e.g., the battery management system (BMS)) may include various components such as a fuse, a current sensing element, a thermistor, a switch, and a balancer.

FIG. 6 is a detailed block diagram of a typical battery management device (BMS) of the prior art.

The battery 100 supplies power to a vehicle as needed, and the connection between the battery pack and the vehicle are connected/disconnected through a battery disconnect unit (BDU) 50. The BDU 50 includes a switching unit. The switching unit may include a relay, a fuse, a temperature sensor, a current sensor (such as a shunt sensor and a hall sensor), etc., and connects the vehicle and the battery 100 to supply power to the vehicle or disconnect the vehicle and the battery 10. For example, when the vehicle stops driving, the connection between the battery 100 and the vehicle is cut off by opening the relay included in the switching unit in the BDU 50.

Referring to FIG. 6, a case is illustrated wherein a battery management device (BMS) 40 managing the battery 100 is composed of a slave BMS 30 and a master BMS 60.

In FIG. 6, the slave BMS 30 includes one or more battery monitoring integrated circuits (BMICs). The BMIC may be a component in the form of an IC that is located inside the slave BMS and measures information such as voltage, temperature, and current of the battery cell/module. Referring to FIG. 6, the BMIC is connected to a target battery pack (96S; 96 cells connected in series), monitors the corresponding module (e.g., 24 cells), measures various related parameters, and reports the parameters to the master BMS. In this case, each slave BMS can monitor 24 channels (24 cells), and may be implemented in a form where four slave BMSs monitor one battery pack.

The master BMS 60 communicates with the slave BMS 30 and receives monitoring results for the battery 100 from the slave BMS 30. Here, serial peripheral interface (SPI) communication is performed between the slave BMS 30 and the master BMS 60. The SPI is a method of communicating by connecting SPI lines between ICs in a way that can be applied to internal communication of the BMS. The slave BMS 30 may perform SPI communication with the master BMS 60 through a bridge IC.

The master BMS 60 determines the state of the battery 100 according to the measured values of the voltage, temperature, current, etc. of the battery cells received from the slave BMS 30 and controls charging and discharging of the battery. The master BMS 60 also transmits battery monitoring results and/or related information to other systems connected to the battery. Here, the other system may be a control device located in the vehicle body, that is, an ECU in the vehicle. In this specification, the vehicle body may mean a part of the entire vehicle excluding the battery pack and the BMS.

The master BMS 60 includes various components such as a micro controller unit (MCU), a DC/DC converter, a memory (e.g., EEPROM), a bridge IC, a communication module (e.g., CAN module), a low dropout (LDO) module, and an RTC device.

More specifically, the micro-controller unit (MCU) is a main component of the BMS that manages/controls the BMS as a whole. The communication module is a module for communicating with the vehicle, and the communication module of the BMS may communicate with another system within the device using the controller area network (CAN) protocol. In this case, components, modules, or systems within the BMS may be connected to each other via the CAN bus. CAN communication is a standard communication standard designed to allow microcontrollers and devices to communicate with each other without a host computer within the vehicle and may use a non-host bus method message-based network protocol.

The MCU illustrated in FIG. 6 requires dedicated software to perform operations related to the BMS function, and requires software updates every time for various reasons, such as functional improvement and addition of new functions. Such frequent software update tasks are quite cumbersome in terms of management and may cause the problem of not being able to respond to rapidly changing user demands in a timely manner.

Therefore, the embodiments of the present invention are intended to provide improved BMSs in terms of functionality and price by simplifying the functions of the existing BMS and transferring some of the functions to the vehicle.

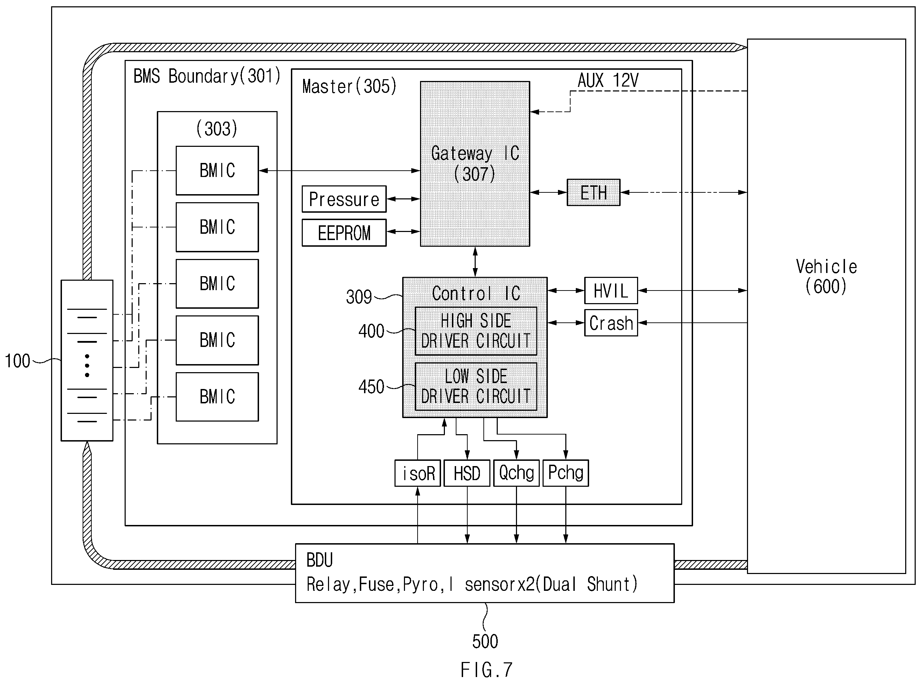

FIG. 7 is a block configuration diagram of a battery management device according to an embodiment of the present invention.

Referring to FIG. 7, a battery 100 supplies power to an external electronic device (e.g., a vehicle) 600 according to a request from the vehicle, and the connection between the battery pack and the vehicle can be connected/disconnected through a battery disconnect unit (BDU) 500.

The BDU 500 includes a switching unit. The switching unit may include a relay, a fuse, a temperature (pyro) sensor, a current sensor, etc., and may supply high power to the vehicle by connecting the vehicle and the battery pack or disconnect the vehicle and the battery pack. For example, when the vehicle stops driving, the relay included in the switching unit within the BDU circuit may be opened, thereby cutting off the connection between the battery and the vehicle. Here, the current sensor may include a dual shunt sensor.

In addition, one or more BMIC modules included in the at least one slave device 303 is connected to the battery 100 and measures information such as voltage, temperature, and current for one or more cells in the battery. The BMIC module is a battery state measurement module. Referring to FIG. 7, the BMIC is connected to a target battery pack (96S; 96 cells connected in series) to monitor the module and measure various related parameters and report the parameters to the battery management device 301 according to this document. For example, each BMIC may monitor 24 channels (24 cells), and may be implemented in a form where four BMICs monitor one battery pack.

The battery management device 301 of the present invention includes a communication circuit 307 (e.g., a gateway module) that receives battery state measurements from one or more battery state measurement modules and transmits the battery state measurements to the external electronic device 600 and a control circuit 309 (e.g., a control module) that controls one or more battery-related function blocks or circuits according to the control of the external electronic device.

The battery management device 301 according to the embodiment of the present invention transmits battery data to the external electronic device 600 through an Ethernet protocol, a controller area network (CAN) protocol, or wireless communication, or receives a control command from the external electronic device 600.

The control circuit 309 uses a control logic circuit and does not operate using BMS-dedicated software. That is, unlike a conventional BMS of the prior art, the control circuit 309 of the present invention does not use separate software. The control circuit 309 may perform basic logic diagnosis through input of a set value (register) and may operate using the control logic circuit. Therefore, since the battery management device 301 does not include an MCU, the battery management device 301 may not require a software update of the battery management device 301.

When a system update is required for improvement or enhancement of functions related to battery management, the system update is performed by updating the processor (e.g., the computing device (e.g., the HPC 150 or 250) equipped in the vehicle) of the external electronic device 600.

Improvement or enhancement of functions related to battery management may include improving the performance (e.g., speed and accuracy) of abnormal diagnosis, introducing new services, improving existing services, and improving the performance (e.g., accuracy and speed) of degradation diagnosis, but the embodiments of this document may not be limited thereto. For example, improving the performance of abnormal diagnosis may include improving the estimation performance of a state indicator. Improving the performance of degradation diagnosis may include improving the estimation performance of a degradation indicator. A new or existing service (e.g., an abnormal diagnosis subscription service) may include a service provided by a battery management device.

The manufacturing cost of the battery management device 301 is lower than the manufacturing cost of a battery management device including a relatively high-performance processor (e.g., an MCU) because the complexity of the structure is reduced. The manufacturing cost reduction effect may be particularly useful to the manufacturer of the battery management device 301.

The time and electrical resources required for a system update related to the battery of an external electronic device including the battery management device 301 is lower than the time and electrical resources required for an update of the battery management device including the relatively high-performance processor (e.g., the MCU) and an upper-level controller. The effect of reducing the time and electrical resources required for the update is particularly useful to vehicle manufacturers. In addition, the effect of reducing the time and electrical resources required for the update may improve the convenience of the driver.

The control circuit 309 includes at least one of a high side driver circuit 400 and a low side driver circuit 450. The high side driver circuit 400 controls the relay of the BDU 500 by supplying power to the relay included in the switching section of the BDU 500 based on the voltage, which is higher than a first reference voltage, being applied to the high side driver 400 through a control command received from the external electronic device 600.

In other words, the high side driver circuit 400 controls the relay by supplying power to the relay included in the switching unit of the BDU 500 based on a voltage applied from the communication circuit 307 to the high side driver circuit 400 to control the switching unit of the BDU 500, a voltage applied from the high side driver circuit 400 by the control logic circuit based on a control command transmitted from the communication circuit 307 or the external electronic device 600 to the control logic circuit to control the switching unit, or a voltage applied from the external electronic device 600 to the high side driver circuit 400 to control the switching unit being higher than the first reference voltage.

The low side driver circuit 450 controls the relay included in the switching section of the BDU 500 based on a voltage lower than a second reference voltage being applied to the low side driver circuit 450 through a control command received from the external electronic device 600.

When receiving a signal indicating an abnormal state of the battery 100 from at least one slave device 303 through the communication circuit 307, the control circuit 450 waits to receive a control command to control a relay included in the switching unit of the BDU 500 so that the connection between the external electronic device 600 (e.g., the vehicle body) and the battery 100 is activated for a predefined period of time. The control circuit 450 controls the relay by supplying power to the relay included in the switching unit of the BDU 500 so that the connection is deactivated based on the control command not being received for a predefined period of time.

In other words, the low side driver circuit 450 controls the relay by supplying power to the relay included in the switching unit of the BDU 500 based on the voltage applied from the communication circuit 307 to the low side driver circuit 450 to control the switching unit of the BDU 500, the voltage applied from the low side driver circuit 450 by the control logic circuit based on a control command transmitted from the communication circuit 307 or the external electronic device 600 to the control logic circuit to control the switching unit, or the voltage applied from the external electronic device 600 to the low side driver circuit 450 to control the switching unit being lower than the second reference voltage.

Here, the control logic circuit may represent a special software or system designed to automate and optimize a decision-making process. The control logic circuit may act as the brain of various applications and may make certain decisions based on predefined rules, algorithms, and data inputs.

By including the high side driver circuit 400 or the low side driver circuit 450 in the control circuit 309, the battery management device 301 controls the relay in a designated situation even without performing a computational operation. In other words, even if the battery management device 301 does not include a processor (e.g., a micro-controller unit (MCU)), the control circuit 309 opens or closes the relay by supplying power to the relay in a designated situation through the high side driver circuit 400 or the low side driver circuit 450.

When a problem occurs in the battery, the control circuit 309 may perform control on the battery-related circuit regardless of the control of the external electronic device 600 (e.g., the vehicle body) through the high side driver circuit 400 or the low side driver circuit 450. In other words, when the control circuit 309 obtains a signal indicating an abnormal state of the battery from at least one slave device 303 through the communication circuit 307.

Even if the control circuit 309 does not receive a control command, the control circuit 309 controls the relay included in the switching unit of the BDU 500 through the high side driver circuit 400 or the low side driver circuit 450 so that the connection between the external electronic device 600 (e.g., the vehicle body) and the battery 100 is deactivated.

According to another embodiment, when the control circuit 309 obtains a signal indicating an abnormal state of the battery from the at least one slave device 303 through the communication circuit 307, the control circuit 309 controls a relay included in the switching unit to deactivate the connection between the external electronic device 600 and the battery regardless of the control command through the high side driver circuit 400 or the low side driver circuit 450.

According to still another embodiment, after receiving a signal indicating an abnormal state from at least one slave device 303, the control circuit 309 waits to receive a control command for controlling a relay included in the switching unit so that the connection between the external electronic device and the battery is activated for a specified time. When the control command is not received from the external electronic device through the communication circuit 307 within the predefined period of time, the control circuit 309 controls the relay included in the switching unit so that the connection between the external electronic device and the battery is deactivated. Here, the control circuit 307 may control the relay included in the switching unit through the high side driver circuit 400 or the low side driver circuit 450.

Here, the abnormal state of the battery may include a situation that may pose a threat to safety, such as an overvoltage state of the battery or an undervoltage state of the battery.

In addition, the battery-related circuit may include one or more relays included in the switching unit of the battery disconnect unit (BDU).

The communication circuit 307 may communicate with one or more ECUs in the vehicle via an Ethernet protocol through an Ethernet (ETH) module or communicate with a CAN protocol through a CAN module, or communicate wirelessly.

The BDU 500 includes one or more of an insulation resistance measurement sensor, a temperature sensor, and a current sensor. An insulation resistance monitoring module (isoR) may monitor an insulation state of a battery system.

The at least one slave device 303 includes one or more battery monitoring integrated circuits (BMICs) that measure the state values of a plurality of cells included in the battery 100.

Referring to FIG. 7, the battery management device 301 does not include many functional blocks included in the existing BMS 40 as illustrated in FIG. 6. Representatively, the battery management device 301 according to an embodiment does not include a DC/DC converter, an LDO, an RTC, an SBC, and a bridge IC.

In addition, the battery management device 301 according to an embodiment does not include a circuit for measuring pack voltage and a high voltage (HV) measurement function for relay diagnosis. The HV measurement for measuring the pack voltage and relay diagnosis may be performed through another configuration located in the external electronic device 600 (e.g., a vehicle body).

On the other hand, the battery management device 301 includes a sensor circuit-related module for sensing parameters related to the state of the battery and safety issues thereof. For example, the battery management device 301 includes an insulation resistance measurement sensor, a temperature sensor, and a current sensor (isoR module, HSD module, Qchg module, Pchg module).

Meanwhile, the battery management device 301 further includes modules for safety such as a high voltage interlock (HVIL) module and a crash detection (crash) module, and may receive a control signal of an external electronic device (e.g., a vehicle body) related to an event directly related to the safety of the external electronic device (e.g., the vehicle body). Here, the HVIL module has a function of checking whether the main high voltage connector is fastened well. The crash detection module refers to a module that receives a signal transmitted to the BMS when an airbag signal is detected in the event of a crash in an external electronic device (e.g., a vehicle).

Since the the battery management device 301 according to this document includes a sensor circuit-related module that senses parameters related to the state of the battery and safety issues thereof, when an abnormal state occurs in the battery, the battery management device 301 performs control on a battery-related circuit (e.g., a relay connecting the external electronic device 600 and the battery 100) regardless of the control of the external electronic device (e.g., a vehicle body).

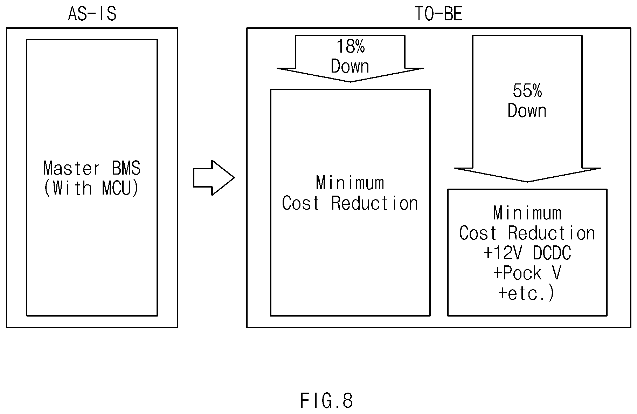

FIG. 8 is a diagram showing a cost reduction effect that can be expected when applying an embodiment of the present invention.

This document can provide a battery management device 301 with improved functionality and price by simplifying the function of an existing battery management device (BMS) and transferring some of its functions to the vehicle.

Referring to FIG. 8, for example, when only the MCU is removed from the existing BMS structure, a cost reduction effect of approximately 18% can be expected. In addition, when the 12V DC/DC converter and pack voltage measurement circuit are removed from the existing BMS structure as well as the MCU, a cost reduction effect of approximately 55% can be expected.

As discussed above, according to the battery management device 301 of the present invention, the MCU in the existing BMS is deleted, so that a cumbersome software upgrade work is not required. In addition, the degree of freedom in functional consultation can be increased to reduce the BMS, and the speed of BMS development can be maximized by deleting individual functional blocks.

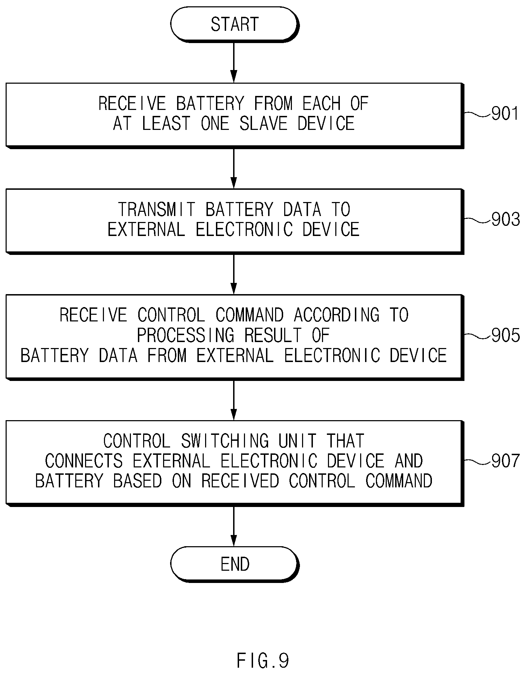

FIG. 9 is a diagram showing the flow of operations of a battery management device that receives a control command from an external electronic device, in a battery management method according to an embodiment of the present invention.

Referring to FIG. 9, in a first operation 901, a battery management device 301 according to an embodiment receives battery data from each of at least one slave device 303.

In a second operation 903, the battery management device 301 transmits the battery data to an external electronic device 600.

In a third operation 905, the battery management device 301 receives a control command according to a processing result of battery data from the external electronic device.

In a fourth operation 907, the battery management device 301 controls a switching unit that connects the external electronic device and the battery.

According to an embodiment, the switching unit includes a relay.

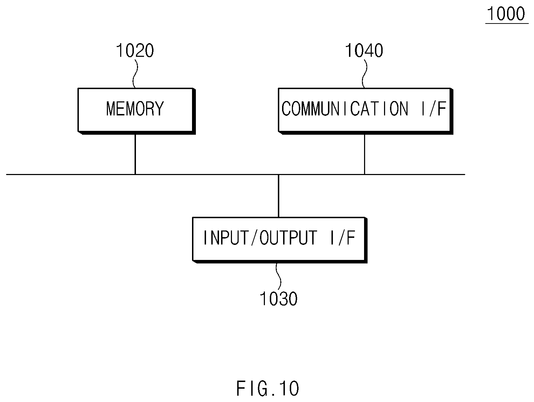

FIG. 10 is a block diagram showing a hardware configuration of a computing system for performing an operating method of a communication control device according to an embodiment disclosed in this document.

Referring to FIG. 10, a computing system 1000 according to an embodiment includes an MCU 1010, a memory 1020, an input/output I/F 1030, and a communication I/F 1040.

The computing system 1000 may be performed by the battery management device 301 according to an embodiment shown in FIGS. 1 to 9 described above.

The memory 1020 may store various setting values.

A plurality of such memories 1020 may be provided as needed. The memory 1020 may be a volatile memory or a nonvolatile memory. The memory 1020 as the volatile memory may be RAM, DRAM, SRAM, or the like. The memory 1020 as the nonvolatile memory may be ROM, PROM, EAROM, EPROM, EEPROM, flash memory, etc. The examples of the memories 1020 listed above are only examples and are not limited to these examples.

The input/output I/F 1030 provides an interface that allows data to be transmitted and received between an input device (not shown) such as a keyboard, mouse, or touch panel, and an output device (not shown) such as a display and the MCU 1010.

The communication I/F 1040 is a configuration that can transmit and receive various data with the server and may be various devices that can support wired or wireless communication. For example, the electronic device 301 transmits and receives various information, including a shape model of a battery cell, to and from a separately provided external server through the communication I/F 1040.

In this way, the computer program according to an embodiment is implemented as a module that performs, for example, each function shown in FIG. 3, by being recorded in the memory 1020 and processed by the MCU 1010.

In the above, even though all the components constituting the embodiments disclosed in this document have been described as being combined as one or operating in combination, the embodiments disclosed in this document are not necessarily limited to these embodiments. That is, within the scope of the purpose of the embodiments disclosed in this document, all of the components may be selectively combined and operated in combination with one or more of the components.

In addition, the terms "include," "configure," or "have" described above, unless specifically stated to the contrary, mean that the corresponding component may be included, and therefore should be interpreted as further including other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The disclosure described above outlines features of several embodiments so that those skilled in the art may better understand the aspects of the present disclosure. Those skilled in the art will understand that the present disclosure may easily be used as a basis for designing or modifying other structures to perform the same purposes or achieve the same advantages of the embodiments introduced herein. Furthermore, those skilled in the art will recognize that such equivalent configurations do not depart from the scope of the present disclosure, and that various changes, substitutions, and modifications may be made herein without departing from the scope of the present disclosure.

The operation of the method according to the embodiment of this document can be implemented as a computer-readable program or code on a computer-readable recording medium. The computer-readable recording medium includes all kinds of recording devices that store data that can be read by a computer system. In addition, the computer-readable recording medium can be distributed in computer systems connected through a network, so that the computer-readable program or code can be stored and executed in a distributed manner.

While some aspects of the present invention have been described in the context of an apparatus, they may also represent a description of a corresponding method, where a block or device corresponds to a method step or feature of a method step. Similarly, aspects described in the context of a method may also be represented by features of a corresponding block or item or a corresponding device. Some or all of the method steps may be performed by (or using) a hardware device, such as, for example, a microprocessor, a programmable computer, or an electronic circuit. In some embodiments, one or more of the most important method steps may be performed by such a device.

## Claims

1. A battery management device (301) without a processor and comprising:
at least one slave device (303); and
a master device (305) including a communication circuit (307) and a control circuit (309),
wherein the communication circuit (307) is configured to transmit battery data received from each of the at least one slave device (303) to an external electronic device (600), and receive a control command according to a processing result of the battery data from the external electronic device (600), and
the control circuit (309) is configured to control a switching unit (500) that connects the external electronic device (600) and a battery (100) based on the received control command.

2. The battery management device of claim 1, wherein the control circuit (309) is configured to control the switching unit (500) to deactivate a connection between the external electronic device (600) and the battery (100) regardless of the control command when receiving a signal indicating an abnormal state of the battery (100) from the at least one slave device (303) through the communication circuit (307).

3. The battery management device of claim **2,** wherein the abnormal state of the battery (100) includes an overvoltage state in which a voltage of the battery (100) is greater than a first reference voltage, or an undervoltage state in which the voltage of the battery (100) is less than a second reference voltage that is less than the first reference voltage.

4. The battery management device of claim 2, wherein the communication circuit (307) is configured to transmit the signal indicating the abnormal state, which is generated based on the battery data not being included in a predefined range, to the control circuit (309) based on the fact that the signal is received from the at least one slave device (303).

5. The battery management device of claim 1, wherein the control circuit (309) is configured to control the switching unit to deactivate the connection based on the control command for controlling the switching unit to activate the connection between the external electronic device (600) and the battery (100) not being received for a predefined period of time.

6. The battery management device of claim 1, wherein the communication circuit (307) is configured to transmit the battery data to the external electronic device (600) via an Ethernet protocol, a controller area network (CAN) protocol, or wireless communication, or receive the control command from the external electronic device (600).

7. The battery management device of claim 1, wherein the control circuit (309) includes at least one of:
a high side driver circuit (400) that supplies power to a circuit that controls the switching unit based on a voltage, which is higher than a first reference voltage, being applied to the high side driver circuit (400) through the control command; or
a low side driver circuit (450) that supplies power to the circuit that controls the switching unit based on the voltage, which is lower than a second reference voltage, being applied to the low side driver circuit (450) through the control command.

8. The battery management device of claim 1, wherein any one of the at least one slave device (303) includes a battery monitoring integrated circuit (BMIC) that measures the battery data of the battery unit corresponding to the other of the slave devices (303).

9. The battery management device of claim 1, wherein the switching unit includes a relay.

10. A battery management method comprising:
an operation of transmitting battery data received from each of at least one slave device (303) to an external electronic device (600);
an operation of receiving a control command according to a processing result of the battery data from the external electronic device (600) corresponding to the battery data; and
an operation of controlling a switching unit that connects the external electronic device (600) and the battery based on the received control command.

11. The battery management method of claim 10, further comprising:
an operation of controlling the switching unit to deactivate a connection between the external electronic device (600) and the battery regardless of the control command when receiving a signal indicating an abnormal state of the battery (100) from the at least one slave device (303) through a communication circuit (307).

12. The battery management method of claim 11, wherein the abnormal state of the battery (100) includes an overvoltage state in which a voltage of the battery (100) is greater than a first reference voltage, or an undervoltage state in which the voltage of the battery (100) is less than a second reference voltage that is less than the first reference voltage.

13. The battery management method of claim 11, further comprising:
an operation of receiving the signal indicating the abnormal state, which is generated based on the battery data not being included in a predefined range from the at least one slave device (303).

14. The battery management method of claim 10, wherein the battery management method further includes an operation of controlling the switching unit to deactivate the connection based on the control command for controlling the switching unit to activate the connection between the external electronic device (600) and the battery not being received for a predefined period of time.

15. The battery management method of claim 10, wherein the operation of transmitting the battery data received from each of the at least one slave device (303) to the external electronic device (600) includes an operation of transmitting the battery data to the external electronic device via an Ethernet protocol, a controller area network (CAN) protocol, or wireless communication, and
the operation of receiving the control command from the external electronic device (600) corresponding to the battery data includes an operation of receiving the control command from the external electronic device (600).

16. The battery management method of claim 10, wherein the operation of controlling the switching unit that connects the external electronic device (600) and the battery (100) based on the received control command includes:
an operation of supplying power to a circuit (309) that controls the switching unit through a high side driver circuit (400) based on a voltage, which is higher than a first reference voltage, being applied to the high side driver circuit (400) through the control command; or
an operation of supplying power to the circuit (309) that controls the switching unit through a low side driver circuit (450) based on a voltage, which is lower than a second reference voltage, being applied to the low side driver circuit (450) through the control command.

17. The battery management method of claim 10, wherein the battery data includes battery data of a battery unit corresponding to any one of the at least one slave device (300).

18. The battery management method of claim 10, wherein the switching unit includes a relay.
